# EUROPEAN PATENT APPLICATION

(11) **EP 4 198 707 A1**
(43) Date of publication of application: **21.06.2023**
(21) Application number: 22209826.1
(22) Date of filing: 28.11.2022
(51) Int. Cl.: G06F 3/12, G06Q 30/0207, G06Q 30/0601

(54) **SERVER AND CONTROL METHOD FOR SERVER**

(30) Priority: 17.12.2021 JP 2021205451
(71) Applicant: BROTHER KOGYO KABUSHIKI KAISHA, Aichi-ken 467-8561 (JP)
(72) Inventor: NARITA, Yuki, Nagoya-shi, Aichi, 467-8562 (JP)
(74) Representative: Kuhnen & Wacker Patent- und Rechtsanwaltsbüro PartG mbB

(57) **Abstract**

A server (10, 100) may receive user information (PS1, AC1) from a terminal device (200) in a case where predetermined communication is executed with the terminal device, wherein the predetermined communication is related to supply of a device to the user, the device is transported to a predetermined place; store authentication information (AK1) in a memory (34, 134); notify the authentication information to the user; in a case where the authentication information is inputted to the device after the device has been transported to the predetermined place, receive the authentication information from the device; and shift a state of the server from a first state to a second state, wherein the first state is a state where the specific service is used is not provided to the user, and the second state is a state where the specific service is provided to the user.

## Description

### BACKGROUND ART

An information management server that provides a service of shipping ink cartridges for printers is known. In order to receive the service, a user logs into the information management server by operating a terminal device and selects a code display button displayed at the terminal device. As a result, a PIN code obtained from the information management server is displayed at the terminal device. The user then inputs the PIN code to a printer. The printer sends the PIN code inputted by the user to the information management server. The information management server starts providing the service in response to authentication of the PIN code received from the printer succeeding.

### DESCRIPTION

In the technology above, the PIN code is not issued unless the user selects the code display button at the terminal device. For example, if the user forgets to select the code display button despite the printer having been installed, the service is not provided. The disclosure herein provides a technology for promptly providing a specific service.

A server disclosed herein may comprise: a memory; a communication interface configured to communicate with an external; a first receiving unit configured to receive user information indicating a user from a terminal device via the communication interface in a case where predetermined communication is executed with the terminal device via the communication interface, wherein the predetermined communication is related to supply of a device to the user, the device is transported to a predetermined place after the predetermined communication has been executed, and the user information is used for a specific service related to the device; a first storing unit configured to, in a case where the user information is received from the terminal device, store authentication information in the memory in association with the user information received from the terminal device; a notification unit configured to, in a case where the authentication information is stored in the memory, notify the authentication information to the user; a second receiving unit configured to, in a case where the authentication information notified to the user is inputted to the device after the device has been transported to the predetermined place, receive the authentication information from the device via the communication interface; and a shifting unit configured to, in a case where the authentication information is received from the device, shift a state of the server from a first state to a second state, wherein the first state is a state where the specific service for which the user information is used is not provided to the user, and the second state is a state where the specific service for which the user information is used is provided to the user.

According to this configuration, the authentication information is notified to the user in the case where the predetermined communication, which is related to supply of the device to the user, is executed with the terminal device. Then, the user can receive the specific service by inputting the authentication information to the device after the device has been transported to the predetermined place. That is, the authentication information is notified to the user in response to the device being supplied to the user. The user thus does not need to request the server to notify the user of the authentication information after the device has been transported to the predetermined place. Therefore, the specific service can be provided promptly.

A control method for implementing the server above, a computer program for implementing the server above, and a non-transitory computer-readable recording medium storing the computer program are also novel and useful. A communication system comprising the server, terminal device, and device above is also novel and useful.
FIG. 1 illustrates a configuration of a communication system.
FIG. 2 illustrates a block diagram of a service server and a management server.
FIG. 3 illustrates a sequence diagram of a process to purchase an MFP online and a transition of screens.
FIG. 4 illustrates a sequence diagram continued from FIG. 3.
FIG. 5 illustrates a sequence diagram of a process to be executed after the MFP has been transported to a predetermined place.
FIG. 6 illustrates a sequence diagram continued from FIG. 5.
FIG. 7 illustrates a configuration of a communication system.
FIG. 8 illustrates a sequence diagram of a process to purchase an MFP online and a transition of screens.
FIG. 9 illustrates a sequence diagram continued from FIG. 8.
FIG. 10 illustrates a sequence diagram continued from FIG. 9.
FIG. 11 illustrates a sequence diagram of a process to purchase an MFP at a store and a transition of screens.

### (First Embodiment)

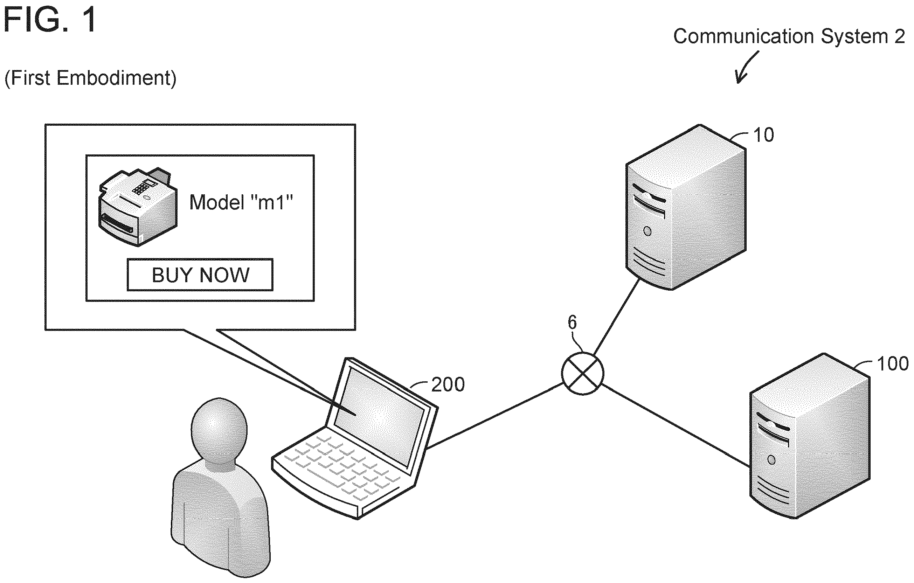

### (Configuration of Communication System 2; FIG. 1)

As illustrated in FIG. 1, a communication system 2 comprises a service server 10, a management server 100, and a user terminal 200. The user terminal 200 is a terminal device such as a notebook PC, a laptop PC, a tablet terminal, a smartphone, or the like. The service server 10, the management server 100, and the user terminal 200 are connected to the Internet 6. The devices 10, 100, and 200 are communicable with other devices on the Internet 6 (e.g., the service server 10) via the Internet 6. Hereinafter, the service server will be referred to as "SP server".

The SP server 10 provides various services related to multifunctional device, including an online shopping service of purchasing a multifunctional device online, a shipping service of shipping a consumable article for a multifunctional device to a user, etc. The multifunctional device (which will be abbreviated as "MFP" hereinafter) is a device having multiple functions such as a print function, a scan function, etc. The consumable article is, for example, a color material cartridge mountable to the MFP. The color material cartridge is, for example, a toner cartridge, an ink cartridge, or the like. The management server 100 collects and manages information of multifunctional devices used by users receiving the shipping service. The SP server 10 and the management server 100 are installed, for example, by a vendor of the MFP. One of the SP server 10 and the management server 100 may be installed by a business entity different from the vendor of the MFP.

In the present embodiment, a user accesses the SP server 10 by operating the user terminal 200. The user then purchases an MFP by using the online shopping service provided by the SP server 10. Further, the user receives a consumable article for the MFP by using the shipping service provided by the SP server 10.

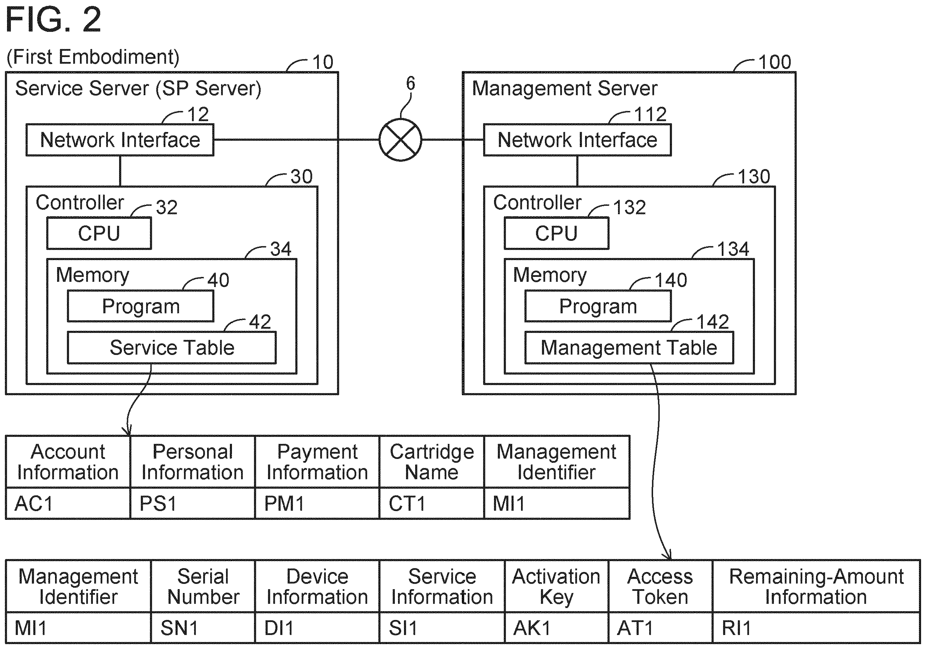

### (Configuration of SP Server 10; FIG. 2)

The SP server 10 comprises a network interface 12 and a controller 30. The units 12 and 30 are connected to a bus line (reference sign omitted). Hereinafter, an interface will be abbreviated as "I/F". The network I/F 12 is configured for communication via the Internet 6 and connected to the Internet 6.

The controller 30 comprises a CPU 32 and a memory 34. The CPU 32 executes various processes in accordance with a program 40 stored in the memory 34. The memory 34 is configured of a volatile memory, a non-volatile memory, etc. In addition to the program 40, the memory 34 also stores a service table 42.

The service table 42 stores information used for the SP server 10 to provide various services. The service table 42 stores, for each of a plurality of users, account information, personal information, payment information, a cartridge name, and a management identifier. The account information is information indicating an account of the user (i.e., an account name and a password). The personal information is the name, address, e-mail address, etc. of the user. The payment information is information used for payment and is, for example, a credit-card number, etc. The cartridge name is a model name of a color material cartridge shipped by the shipping service. The management identifier is an identifier for identifying an MFP used by a user receiving the shipping service and is generated by the management server 100.

### (Configuration of Management Server 100; FIG. 2)

The management server 100 comprises a network I/F 112 and a controller 130. The units 112 and 130 are connected to a bus line (reference sign omitted), and the network I/F 112 is connected to the Internet 6.

The controller 130 comprises a CPU 132 and a memory 134. The CPU 132 executes various processes in accordance with a program 140 stored in the memory 134. In addition to the program 140, the memory 134 also stores a management table 142.

The management table 142 stores information related to MFPs used by users receiving the shipping service. The management table 142 stores, for each of the plurality of MFPs, a management identifier, a serial number, device information, service information, an activation key, an access token, and remaining-amount information. The serial number is an identification number assigned to the MFP during manufacture. The device information is a model name of the MFP, information indicating specifications of the MFP (e.g., version of firmware), or the like. The service information is information indicating a service a user of the MFP receives. The access token is information for authentication of the MFP by the management server 100. The remaining-amount information indicates a history of remaining amounts of color material in a color material cartridge currently mounted on the MFP. The activation key will be described later.

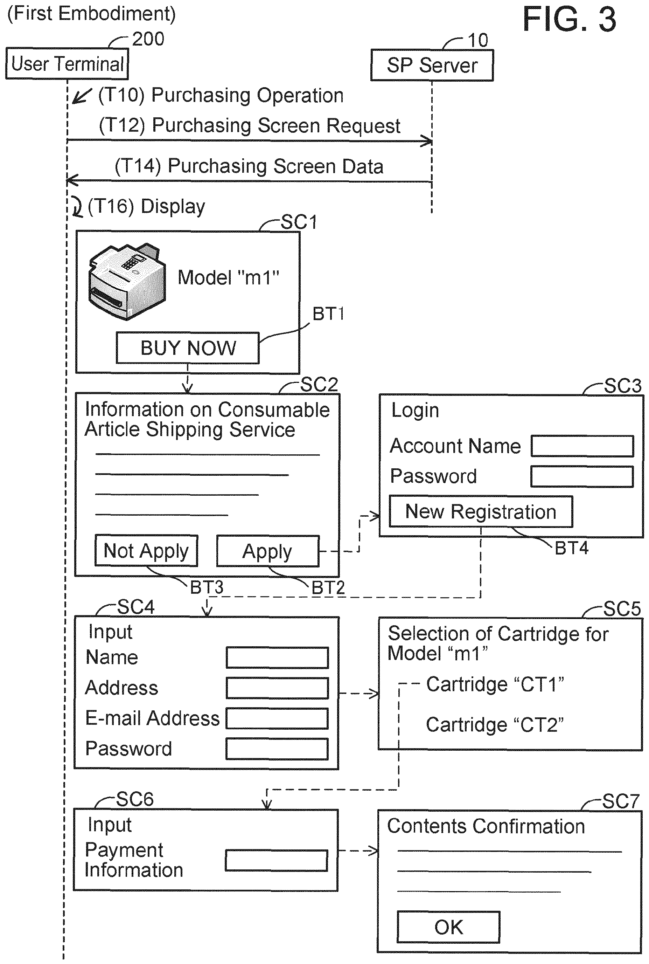

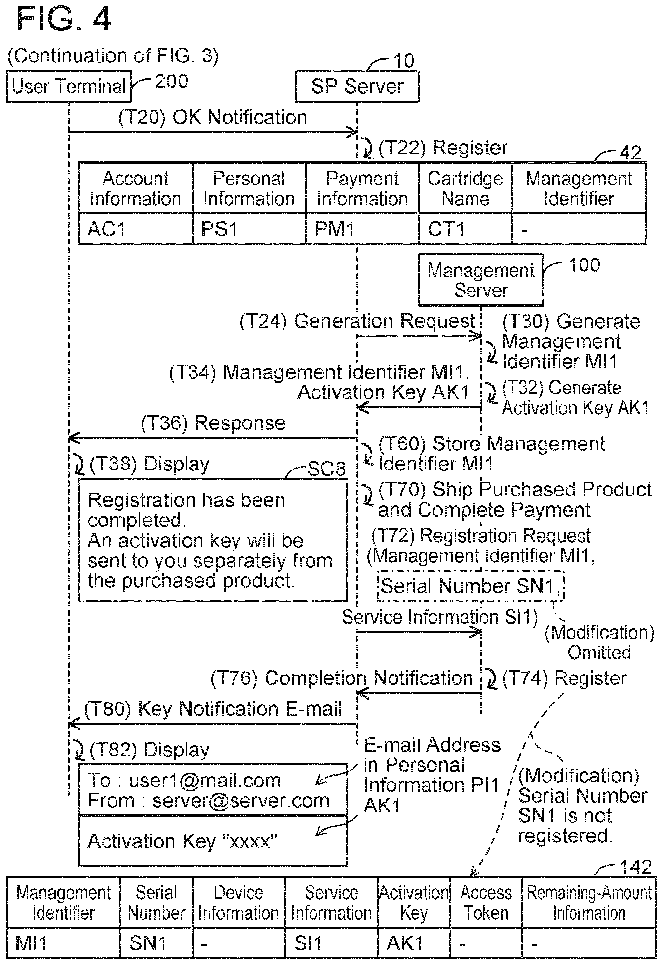

### (Process to Purchase MFP Online; FIGS. 3, 4)

Referring to FIGS. 3 and 4, a process to purchase an MFP with a model name "m1" online will be described. Hereinafter, in order to facilitate understanding, steps executed by the CPUs of devices (e.g., the CPU 32 of the SP server 10, etc.) in accordance with the programs (e.g., the program 40, etc.) will be described with the devices (e.g., the SP server 10, etc.) as the subject of action, not with the CPUs as the subject of action. Further, in the following description, the devices 10, 100, and 200 execute communication with other devices via the Internet 6, and thus a phrase "via the Internet 6" will be omitted unless necessary. Further, the devices 10 and 100 execute communication with other devices via the network I/Fs 12 and 112, and thus a phrase "via the network I/F 12 (or the network I/F 112)" will be omitted unless necessary.

In T10, the user performs a purchasing operation to purchase the MFP with the model name "m1" (termed the MFP"m1", hereinafter) by operating the user terminal 200. The purchasing operation is, for example, an operation of selecting a button in a screen corresponding to screen data the user terminal 200 received from the SP server 10. This screen is displayed, for example, by a browser program of the user terminal 200.

When accepting the purchasing operation from the user in T10, the user terminal 200 sends a purchasing screen request to the SP server 10 in T12. The purchasing screen request is a signal that requests purchasing screen data corresponding to a purchasing screen SC1 that includes a purchase button BT1 for accepting an instruction for purchase of the MFP"ml". The purchasing screen request is, for example, an HTTP command. The user terminal 200 receives the purchasing screen data from the SP server 10 in T14 and displays the purchasing screen SC1 in T16.

In the present case, the user selects the purchase button BT1 in the purchasing screen SC1. As a result, screens SC2 to SC7, which will be described later, are displayed sequentially. As with the purchasing screen SC1, the screens SC2 to SC7 are displayed at the user terminal 200 by the SP server 10 sending screen data corresponding to each of the screens SC2 to SC7 to the user terminal 200.

In the present embodiment, the user can purchase the MFP"ml" (i.e., supply of the MFP"ml" to the user) and apply for the shipping service of color material cartridge mountable to the MFP"ml" at a time through the screens SC2 to SC7, which will be described later. Thus, user convenience is improved.

When the purchase button BT1 in the purchasing screen SC1 is selected, the user terminal 200 displays an inquiry screen SC2. The inquiry screen SC2 includes a message that inquires of the user whether to apply for the shipping service or not, an OK button BT2 for accepting an instruction to apply for the shipping service, and a cancel button BT3 for accepting an instruction not to apply for the shipping service.

In the present case, the user selects the OK button BT2 in the inquiry screen SC2. When the OK button BT2 is selected, the user terminal 200 displays an account screen SC3. If the user selects the cancel button BT3 in the inquiry screen SC2, the screens SC3, SC4, SC6, and SC7, which will be described later, will be displayed but the screen SC5, which will be described later, will not be displayed. That is, payment and shipping of the MFP"ml" will be done but the application for the shipping service will not be made.

The account screen SC3 includes an input field for input of account information and a registration button BT4 for accepting an instruction to register new account information. In the present case, the service table 42 of the SP server 10 has not stored account information of the user yet. The user selects the registration button BT4 in the account screen SC3. When the registration button BT4 is selected, the user terminal 200 displays a first information input screen SC4.

The first information input screen SC4 includes an input field for input of personal information (e.g., name, address, e-mail address) of the user and a password. An e-mail address inputted to the first information input screen SC4 is also used as an account name of the user.

In the present case, the user inputs personal information PS1 (see FIG. 2) and a password of account information AC1 (see FIG. 2) to the first information input screen SC4. The user terminal 200 sends the information inputted to the first information input screen SC4 (i.e., the personal information PS1 and the password) to the SP server 10 and further displays a selection screen SC5.

The selection screen SC5 includes a selection field for selecting a color material cartridge to be shipped by the shipping service from among multiple types of color material cartridges mountable to the MFP"ml".

In the present case, the user selects a color material cartridge with a cartridge name "CT1" from among the multiple types of color material cartridges in the selection screen SC5. The user terminal 200 sends the cartridge name "CT1" selected in the selection screen SC5 to the SP server 10 and further displays a second information input screen SC6.

The second information input screen SC6 includes an input field for input of payment information (e.g., a credit-card number). In the present case, the user inputs payment information PM1 (see FIG. 2) to the second information input screen SC6. The user terminal 200 sends the payment information PM1 inputted to the second information input screen SC6 to the SP server 10 and further displays a confirmation screen SC7.

The confirmation screen SC7 includes a message that confirms details about the purchase of the MFP"m1" and application for the shipping service and an OK button. In the present case, the user selects the OK button in the confirmation screen SC7. The user terminal 200 then sends the SP server 10 an OK notification indicating that the OK button was selected.

When receiving the OK notification from the user terminal 200 in T20 of FIG. 4, the SP server 10 registers (stores) the information inputted to the screens SC4 to SC6 of FIG. 3 in the service table 42 in T22. Thus, the account information AC1, the personal information PS1, the payment information PM1, and the cartridge name CT1 are stored in the service table 42.

If account information is inputted to the input field in the account screen SC3 of FIG. 3, the user terminal 200 sends the inputted account information to the SP server 10, and the SP server 10 executes authentication of the account information received from the user terminal 200. In a case where the authentication of the account information is successful, the SP server 10 stores the cartridge name "CT1" selected in the selection screen SC5 in the service table 42 in association with the authenticated account information.

In T24, the SP server 10 sends the management server 100 a generation request that requests generation of a management identifier. When receiving the generation request from the SP server 10 in T24, the management server 100 generates a new management identifier MI1 in T30. Further, the management server 100 generates an activation key AK1 in T32. The activation key AK1 is a code for authorizing start of the shipping service for which application was made in the confirmation screen SC7 in FIG. 3.

In T34, the management server 100 sends the SP server 10 the management identifier MI1 generated in T30 and the activation key AK1 generated in T32.

When receiving the management identifier MI1 and the activation key AK1 from the management server 100 in T34, the SP server 10 sends a response to the OK notification of T22 to the user terminal 200 in T36.

When receiving the response from the SP server 10 in T36, the user terminal 200 displays an information screen SC8 in T38. The information screen SC8 includes a message indicating that an activation key will be sent to the user separately from the MFP"ml". The user is thus notified that an activation key will be sent.

In T60, the SP server 10 stores the management identifier MI1 received in T34 in the service table 42 in association with the account information AC1 stored in T22. Then, in T70, the SP server 10 completes payment of the purchased product (i.e., the MFP"m1") and ships it. Specifically, the SP server 10 executes an MFP payment process and an MFP shipping process. The MFP payment process is a process of completing the payment of the MFP"ml" by using the payment information PM1 inputted to the second information input screen SC6. If account information is inputted to the input field in the account screen SC3, the MFP payment process is executed using payment information stored in association with the inputted account information. The MFP shipping process is a process of shipping the MFP"m1" to the destination indicated by the personal information PS1 inputted to the first information input screen SC4. If account information is inputted to the input field in the account screen SC3, the MFP shipping process is executed using personal information stored in association with the inputted account information. The MFP shipping process includes, for example, notification to a worker working in a warehouse in which the MFP"ml" is stored. Thus, the MFP"ml" is shipped to the user.

In T72, the SP server 10 sends the management server 100 a registration request that requests registration of various information. This registration request includes the management identifier MI1, a serial number SN1 of the MFP"ml" shipped in T70, and service information SI1 indicating the shipping service the SP server 10 provides. The serial number SN1 is inputted to the SP server 10, for example, by a worker who shipped the MFP"ml".

When receiving the registration request from the SP server 10 in T72, the management server 100 registers, in association with the management identifier MI1 included in the registration request, the other information (i.e., the serial number SN1 and the service information SI1) included in the registration request in the management table 142 in T74. At this point of time, device information, an access token, and remaining-amount information have not been stored yet in association with the management identifier MI1 in the management table 142. In T76, the management server 100 sends the SP server 10 a completion notification indicating that the registration of the information in the registration request has been completed.

When receiving the completion notification from the management server 100 in T76, the SP server 10 sends a key notification e-mail for notifying the user of the activation key AK1 in T80. Specifically, the SP server 10 generates a key notification e-mail in which the activation key AK1 received from the management server 100 in T34 is written in the body. The SP server 10 obtains, from the service table 42, the e-mail address in the personal information PS1 associated with the management identifier MI1. The SP server 10 then sends the generated key notification e-mail to the obtained e-mail address. In this way, the key notification e-mail is sent to the user terminal 200 in T80.

When receiving the key notification e-mail from the SP server 10 in T80, the user terminal 200 displays the key notification e-mail in T82. Thus, the user is notified of the activation key AK1.

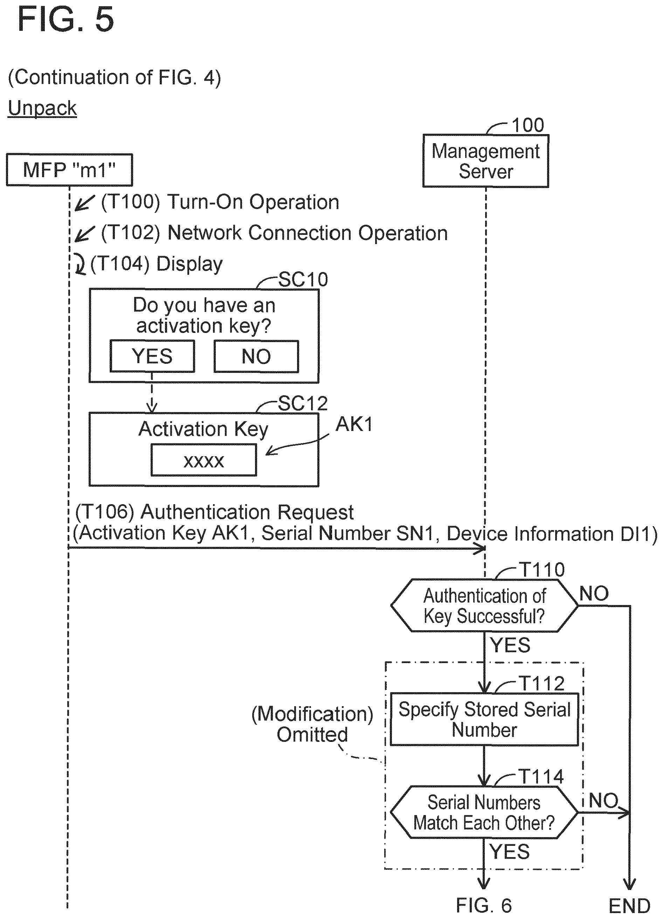

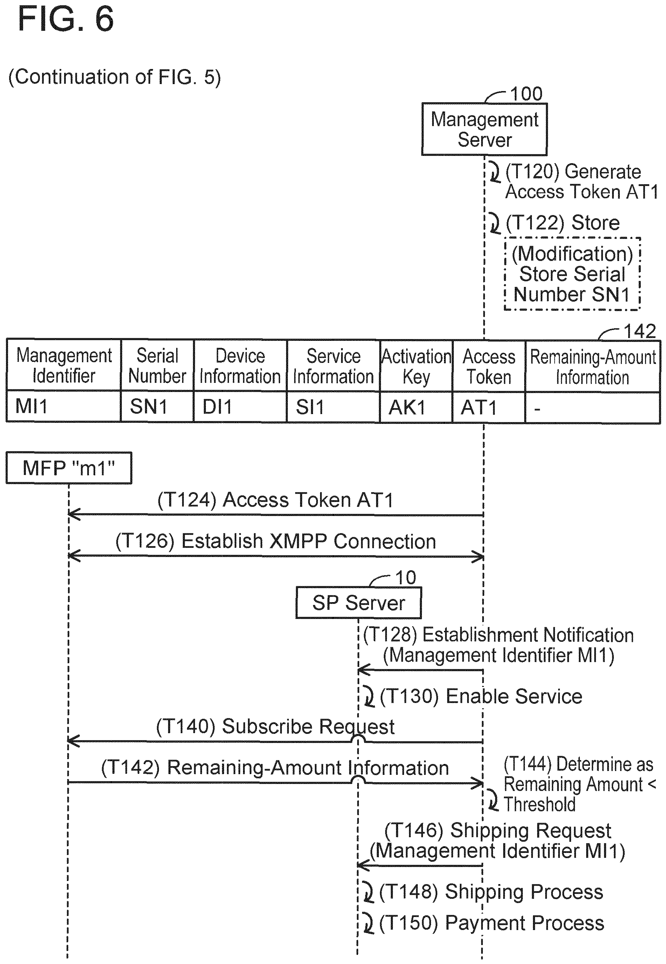

### (Process After Transport of MFP to Predetermined Place; FIGS. 5, 6)

Referring to FIGS. 5 and 6, a process to be executed after the MFP"ml" shipped in T70 of FIG. 4 has been transported to a predetermined place (e.g., a workplace of the user) will be described. The process of FIG. 5 is executed after the process of FIG. 4.

First, the user opens the package of the MFP"ml" and installs the MFP"ml" in the predetermined place. The user then turns on the MFP"ml" in T100. In T102, the user performs a network connection operation for connecting the MFP"ml" to the Internet 6. The network connection operation is, for example, an operation according to WPS (Wi-Fi Protected Setup). The MFP"m1" is thus connected to the Internet 6.

When connected to the Internet 6, the MFP"ml" displays a key inquiry screen SC10 in T104. The key inquiry screen SC/10 includes a message that inquires of the user whether the user has an activation key, a YES button, and a NO button. In the present case, the user selects the YES button in the key inquiry screen SC10 since the user was notified of the activation key AK1 in T82 of FIG. 4. If the NO button in the key inquiry screen SC10 is selected, display of a key input screen SC12 and steps from T106 onward, which will be described later, are skipped and the process of FIG. 5 is terminated.

When the YES button in the key inquiry screen SC10 is selected, the MFP"ml" displays a key input screen SC12. The key input screen SC12 includes an input field for input of an activation key. In the present case, the MFP"m1" accepts input of the activation key AK1 from the user in the key input screen SC12.

When accepting the input of the activation key AK1 in the key input screen SC12, the MFP"ml" sends the management server 100 an authentication request that requests authentication of the activation key in T106. The authentication request includes the activation key AK1 inputted to the key input screen SC12, the serial number SN1 of the MFP"m1", and device information DI1 of the MFP"ml".

When receiving the authentication request from the MFP"ml" in T106, the management server 100 executes authentication of the activation key included in the authentication request in T110. Specifically, the management server 100 determines whether the activation key in the authentication request matches the activation key AK1 stored in the management table 142. In the present case, the management server 100 determines that the activation key AK1 in the authentication request matches the activation key AK1 in the management table 142, and thus the authentication of the activation key included in the authentication request succeeds. If it is determined that the activation key in the authentication request does not match the activation key AK1 in the management table 142, the authentication of the activation key included in the authentication request fails.

When determining that the authentication of the activation key in the authentication request succeeds (YES in T110), the management server 100 proceeds to T112. On the other hand, when determining that the authentication of the activation key in the authentication request fails (NO in T110), the management server 100 skips steps from T112 onward and terminates the process of FIG. 5. In T112, the management server 100 specifies, in the management table 142, the serial number associated with the activation key AK1 included in the authentication request.

In T114, the management server 100 determines whether the serial number included in the authentication request of T106 matches the serial number specified in T112. In the present case, the MFP"ml" to which the activation key AK1 was inputted is the MFP"ml" shipped in T70 of FIG. 4. In the present case, the serial number SN1 in the authentication request of T106 matches the serial number SN1 specified in T112. The management server 100 determines that the serial numbers match (YES in T114) and proceeds to the process of FIG. 6. On the other hand, if the MFP"ml" to which the activation key AK1 was inputted is different from the MFP"ml" shipped in T70 of FIG. 4, the serial numbers do not match. For example, if a third party improperly knows the activation key AK1, the activation key AK1 may be inputted to an MFP different from the MFP"ml" shipped in T70 of FIG. 4. When determining that the seral numbers do not match (NO in T114), the management server 100 skips the process of FIG. 6 and terminates the process of FIG. 5. This configuration can prevent the third party that improperly knows the activation key AK1 from misusing the shipping service which is to be provided to the user.

In T120 of FIG. 6, the management server 100 generates an access token AT1. In T122, the management server 100 stores the access token AT1 generated in T120 and the device information DI1 included in the authentication request received in T106 of FIG. 5 in the management table 142 in association with the activation key AK1 included in the authentication request.

In T124, the management server 100 sends the access token AT1 generated in T120 to the MFP"m1". In T126, the MFP"m1" establishes an XMPP (Extensible Messaging and Presence Protocol) connection with the management server 100 by using the access token AT1 received in T124. The XMPP connection is a so-called constant connection and is maintained until the MFP"m1" is turned off. By using the XMPP connection, the management server 100 can send requests to the MFP"m1" beyond a firewall of a LAN (not illustrated) to which the MFP"m1" belongs, without receiving requests from the MFP"m1". The management server 100 may send requests to the MFP"m1" not by using the XMPP connection but by another means. For example, an HTTPS (Hypertext Transfer Protocol Secure) connection may be established between the management server 100 and the MFP"m1".

In T128, the management server 100 sends the SP server 10 an establishment notification indicating that the XMPP connection has been established. The establishment notification includes the management identifier MI1. When receiving the establishment notification from the management server 100 in T128, the SP server 10 enables the shipping service in T130. Specifically, the SP server 10 starts providing the shipping service of the color material cartridge with the cartridge name CT1 stored in association with the management identifier MI1 included in the establishment notification. For example, the SP server 10 shifts its state from a state where payment using the payment information PM1 stored in association with the management identifier MI1 cannot be made for the shipping service to a state where the payment can be made. For example, if the shipping service is a service for which the user pays a flat-rate fee regularly, the SP server 10 starts counting for the regular interval.

In T140, the management server 100 sends the MFP"m1", by using the XMPP connection established in T126, a Subscribe request that requests the current remaining amount of color material in the color material cartridge mounted on the MFP"m1" be repeatedly sent to the management server 100. Thus, the MFP"m1" starts sending the current remaining amount repeatedly to the server 100 in T142.

When receiving the current remaining amount from the MFP"m1" in T142, the management server 100 stores the received remaining amount in the management table 142 as remaining-amount information. The management server 100 then determines whether the latest remaining amount in the remaining-amount information stored in the management table 142 is less than a predetermined threshold. In the present case, the management server 100 determines in T144 that the latest remaining amount is less than the predetermined threshold. In this instance, the management server 100 sends the SP server 10 a shipping request that requests shipping of the color material cartridge in T146. The shipping request includes the management identifier MI1. Whether the shipping request is to be sent or not may not be based on whether the latest remaining amount is less than the predetermined threshold or not but may be based on, for example, a change in remaining amounts indicated by the remaining-amount information.

When receiving the shipping request from the management server 100 in T146, the SP server 10 executes a color material cartridge shipping process in T148. The color material cartridge shipping process is a process of shipping the color material cartridge with the cartridge name CT1 stored in association with the management identifier MI1 included in the shipping request to the destination indicated by the personal information PS1 stored in association with the management identifier MI1 included in the shipping request. The color material cartridge shipping process includes, for example, notification to a worker working in a warehouse in which the color material cartridge is stored. The personal information PS1 used in the color material cartridge shipping process is the same as the personal information PS1 used in the MFP shipping process in the course of the online shopping of the MFP"m1". That is, in the present case, there is no need to ask the user to input personal information to be used in the shipping service of color material, in addition to the personal information used in the online shopping of the MFP"m1". Thus, user convenience is improved.

### (Effects of Present Embodiment)

In the present embodiment, the purchase of the MFP"m1" as well as the application for the shipping service are done by the selection of the purchase button BT1 in the purchasing screen SC1 (SC2, SC5, etc. in FIG. 3). Then, in the case where the OK button is selected in the confirmation screen SC7, the SP server 10 sends the key notification e-mail including the activation key AK1 to the user terminal 200 (T80 in FIG. 4). The user can receive the shipping service by inputting the activation key AK1 to the MFP"m1" after the MFP"m1" has been transported to the predetermined place (SC12 in FIG. 5). That is, the activation key AK1 for the shipping service is notified to the user in response to the purchase of the MFP"m1". The user does not need to request the activation key AK1 to the SP server 10 after the MFP"m1" has been installed in the predetermined place. Thus, the shipping service can be provided promptly.

Further, in the present embodiment, the SP server 10 sends the key notification e-mail to the e-mail address included in the personal information PS1 inputted in the course of the online shopping of the MFP"m1" (T80 in FIG. 4). In response to the online shopping of the MFP"m1", the activation key AK1 can be promptly notified to the user.

A comparative example can be conceived in which a piece of paper on which the activation key AK1 is written is packaged with the MFP"m1". In this comparative example, the timing when the activation key AK1 is notified to the user is the same as the timing when the MFP"m1" is transported to the user. In this comparative example, if the MFP"m1" is unexpectedly obtained by a third party different from the user, the activation key AK1 can be improperly obtained by the third party. That is, the third party can misuse the shipping service with respect to the MFP"m1". Contrary to this, in the present embodiment, the activation key AK1 is notified to the user by the key notification e-mail and the timing when the activation key AK1 is notified to the user is different from the timing when the MFP"m1" is transported to the user. For example, if the MFP"m1" is unexpectedly obtained by a third party, the misuse of the activation key AK1 by the third party can be prevented. In a modification, the configuration of the comparative example above may be employed.

### (Modification of First Embodiment)

In the first embodiment above, the serial number SN1 is included in the registration request in T72 of FIG. 4 and the serial number SN1 is stored in the management table 142 in T74. Instead of this, the serial number SN1 may not be included in the registration request and may be stored in the management table 142 not in T74 but in T122 of FIG. 6. In this modification, T112 and T114 of FIG. 5 may not be executed, and the serial number SN1 included in the authentication request of T106 in FIG. 5 may be stored in the management table 142 in T122 of FIG. 6. In the first embodiment above, the serial number SN1 included in the registration request is inputted to the SP server 10, for example, by a worker shipping the MFP"m1". Instead of this, the operation of inputting the serial number SN1 is not performed in this modification. T112 and T114 in FIG. 5 are not executed and the operation of inputting the serial number SN1 can be omitted.

### (Correspondence Relationships)

The SP server 10 and the management server 100 are examples of "server". The memory 34 and the memory 134 are examples of "memory". The network I/F 12 and the network I/F 112 are examples of "communication interface". The MFP and the user terminal 200 are examples of "device" and "terminal device", respectively. In the case where the registration button BT4 is selected in the account screen SC3 of FIG. 3, the personal information PS1 is an example of "user information" and the first information input screen SC4 and the second information input screen SC6 are examples of "input screen". In the case where account information is inputted to the account screen SC3 of FIG. 3, the inputted account information is an example of "user information" and the account screen SC3 is an example of "input screen". The color material cartridge and the shipping service are examples of "consumable article" and "specific service", respectively. The activation key AK1 is an example of "authentication information". The communication in T14 of FIG. 3 is an example of "predetermined communication". The serial number SN1 is an example of "identification information". The purchasing screen SC1 in FIG. 3 is an example of "instruction accepting screen". The state where the sequence from T120 to T130 in FIG. 6 (the establishment of XMPP connection, the enablement of service, etc.) is not executed and the state where the sequence from T120 to T130 in FIG. 6 has been completed are examples of "first state" and "second state", respectively.

Receiving information inputted in the first information input screen SC4 and the second information input screen SC6 in FIG. 3 or receiving account information inputted to the account screen SC3 is an example of "receive user information". T22, T60, and T74 in FIG. 4 are an example of "store authentication information in the memory". T80 in FIG. 4 and T106 in FIG. 5 are examples of "notify the authentication information" and "receive the authentication information", respectively. The sequence from T120 to T130 in FIG. 6 is an example of "shift a state of the server".

### (Second Embodiment)

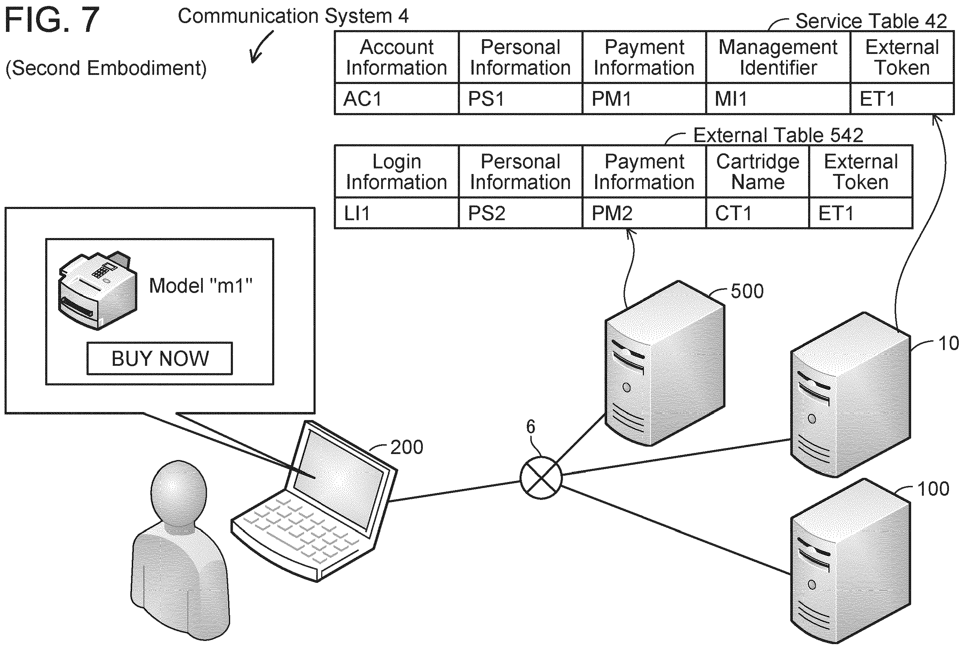

### (Configuration of Communication System 4; FIG. 7)

A communication system 4 according to the present embodiment comprises an external server 500 in addition to the devices 10, 100, and 200 of the communication system 2 according to the first embodiment. In the present embodiment, the SP server 10 provides the MFP online shopping service but does not provide the color material cartridge shipping service, while the external server 500 provides the color material cartridge shipping service. The external server 500 is installed by a business entity different from the vendor that installed the SP server 10 and the management server 100.

### (Configuration of Service Table 42; FIG. 7)

A service table 42 according to the present embodiment is the same as the service table 42 according to the first embodiment except that the former stores an external token instead of the cartridge name. The external token is used for cooperation between the SP server 10 and the external server 500. The external token is generated by the external server 500.

### (Configuration of External Table 542; FIG. 7)

The external server 500 stores an external table 542. The external table 542 stores information used for the external server 500 to provide the shipping service. The external table 542 stores, for each of a plurality of users, login information, personal information, payment information, a cartridge name, and an external token. The login information is information for the user to long into the external server 500 and indicates an account of the user in the external server 500. The login information is, for example, an account name and a password.

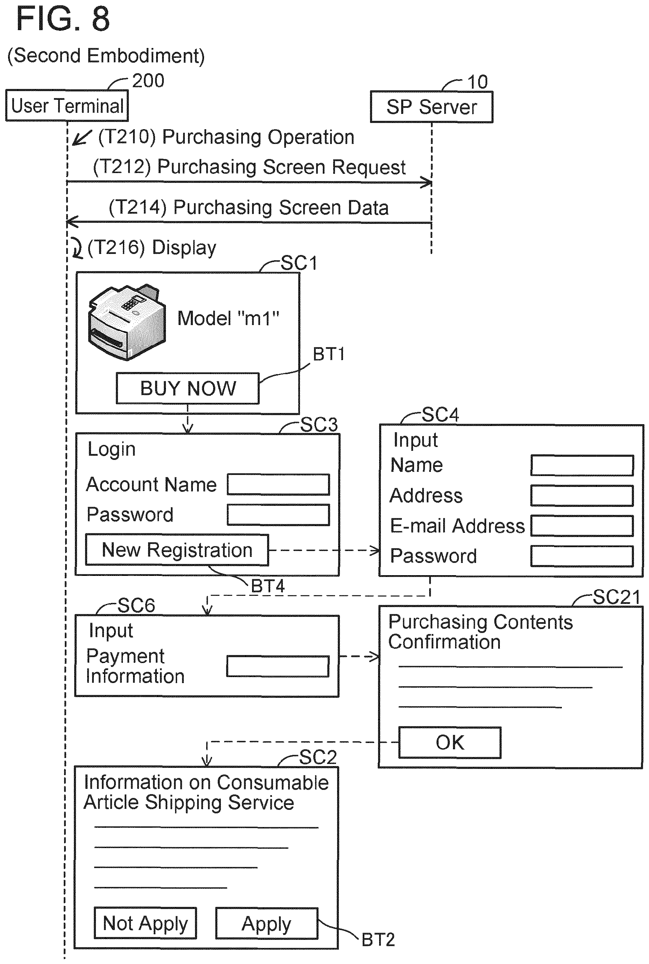

### (Process to Purchase MFP Online; FIGS. 8, 9, 10)

A sequence from T210 to T216 is the same as the sequence from T10 to T16 in FIG. 3. In the present embodiment, when the purchase button BT1 in the purchasing screen SC1 is selected, screens SC3, SC4, SC6, SC21, and SC2 are displayed sequentially. A confirmation screen SC21 includes a message that confirms purchase of the MFP"m1" and an OK button. Unlike the confirmation screen SC7 in the first embodiment, the confirmation screen SC21 does not include the message that confirms details about the application for the shipping service. In the present embodiment, when the OK button in the confirmation screen SC21 is selected, the user terminal 200 displays an inquiry screen SC2 inquiring whether to apply for the shipping service or not. In the present case, the user selects an OK button BT2 in the inquiry screen SC2. Thus, the user terminal 200 sends the SP server 10 an application notification indicating that the OK button was selected.

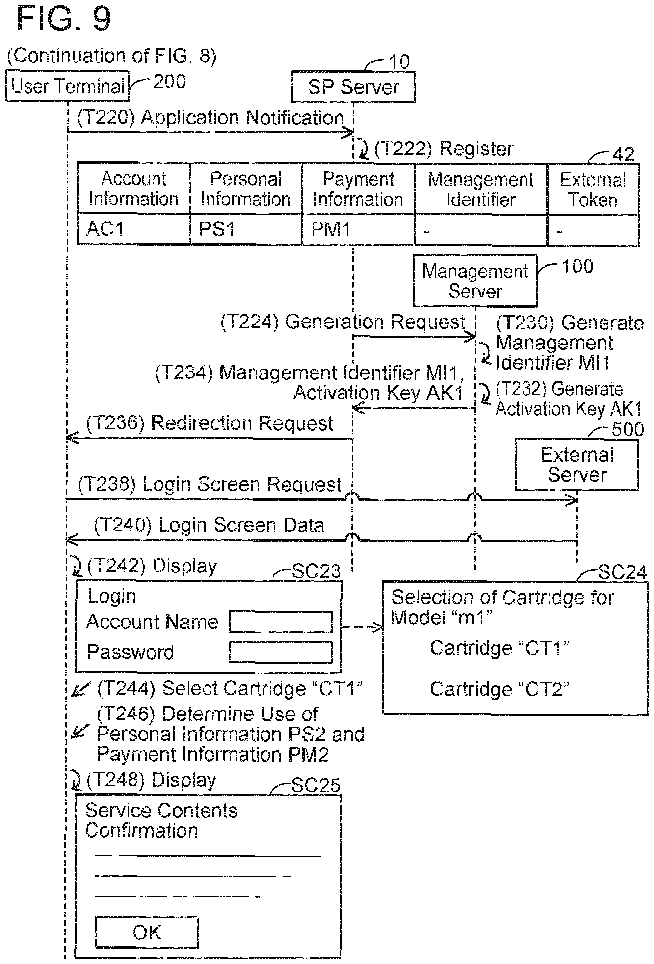

When receiving the application notification from the user terminal 200 in T220 of FIG. 9, the SP server 10 registers information inputted to SC4, SC6 in FIG. 8 in the service table 42 in T222. Thus, the account information AC1, the personal information PS1, and the payment information PM1 are stored in the service table 42.

A sequence from T224 to T234 is the same as the sequence from T24 to T34 in FIG. 4. In T236, the SP server 10 sends the user terminal 200 a redirection request that requests redirection to the external server 500. The redirection request includes an URL of the external server 500.

When receiving the redirection request from the SP server 10 in T236, the user terminal 200 sends a login screen request to the external server 500 in T238 by using the URL of the external server 500 included in the redirection request. In T240, the user terminal 200 receives login screen data from the external server 500. The login screen data corresponds to a login screen SC23 for login to the external server 500.

In T242, the user terminal 200 displays the login screen SC23 corresponding to the login screen data received in T240. The login screen SC23 includes an input field for input of login information. In the present case, login information LI1, personal information PS2, and payment information PM2 of the user are stored in advance in the external table 542 (see FIG. 7). In the present case, the user inputs the login information LI1 to the login screen SC23 and a login session is thereby established between the user terminal 200 and the external server 500. Then, the user terminal 200 receives screen data corresponding to a selection screen SC24 from the external server 500 through the login session, and displays the selection screen SC24. The selection screen SC24 is the same as the selection screen SC5 in FIG. 3.

In T244, the user selects a color material cartridge with the cartridge name "CT1" from among multiple types of color material cartridges in the selection screen SC24. In T246, the user determines using the personal information PS2 and the payment information PM2 which are stored in association with the login information LI1 in the external table 542.

When accepting the determination of using the personal information PS2 and the payment information PM2 in T246, the user terminal 200 displays a confirmation screen SC25 in T248. The confirmation screen SC25 includes a message that confirms details about application for the shipping service and an OK button. In the present case, the user selects the OK button in the confirmation screen SC25. Thus, the user terminal 200 sends the external server 500 an OK notification indicating that the OK button was selected.

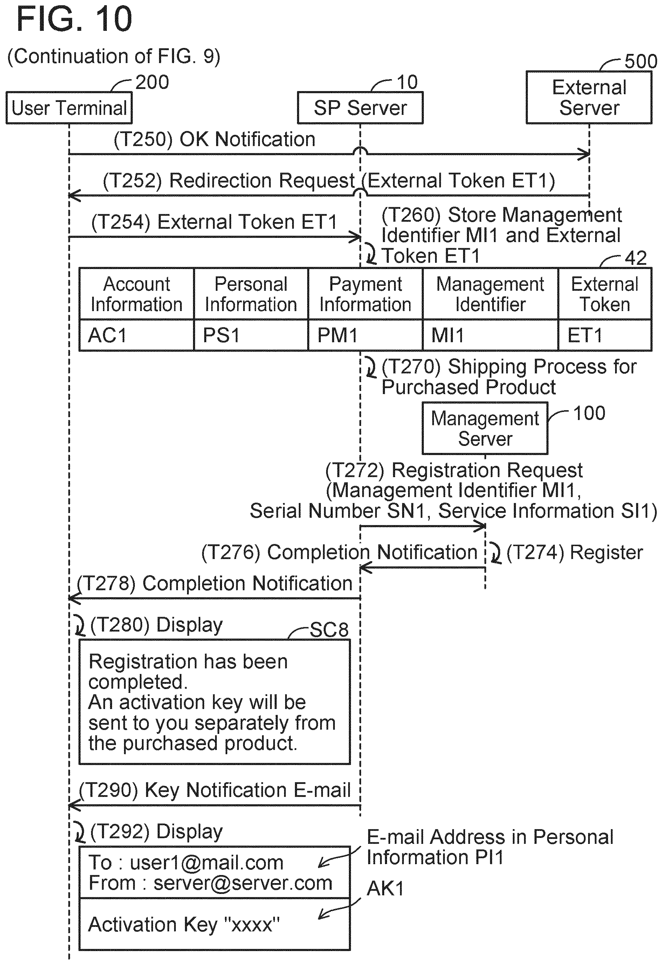

When receiving the OK notification from the user terminal 200 in T250 of FIG. 10, the external server 500 sends the user terminal 200 a redirection request including an external token ET1 and a URL of the SP server 10 in T252. When receiving the redirection request from the external server 500 in T252, the user terminal 200 sends the external token ET1 to the SP server 10 in T254 by using the URL of the SP server 10 included in the redirection request.

When receiving the external token ET1 from the user terminal 200 in T254, the SP server 10 stores in T260 the management identifier MI1 received in T234 and the external token ET1 received in T254 in the service table 42 in association with the account information AC1 stored in T222. A sequence from T270 to T276 is the same as the sequence from T70 to T76 in FIG. 4. In T278, the SP server 10 sends the user terminal 200 a completion notification indicating that the registration of T274 has been completed. T280 is the same as T38 in FIG. 4. Further, T290 and T292 are the same as T80 and T82 in FIG. 4.

In the present embodiment, the external server 500 providing the shipping service and the SP server 10 providing the MFP online shopping service are separate elements. Also in this instance, the activation key AK1 is notified to the user by the key notification e-mail, regardless of whether the product purchased online has been shipped or not. The user does not need to request the activation key AK1 to the SP server 10 after the MFP"m1" has been installed in the predetermined place. Thus, the shipping service can be provided promptly.

### (Third Embodiment)

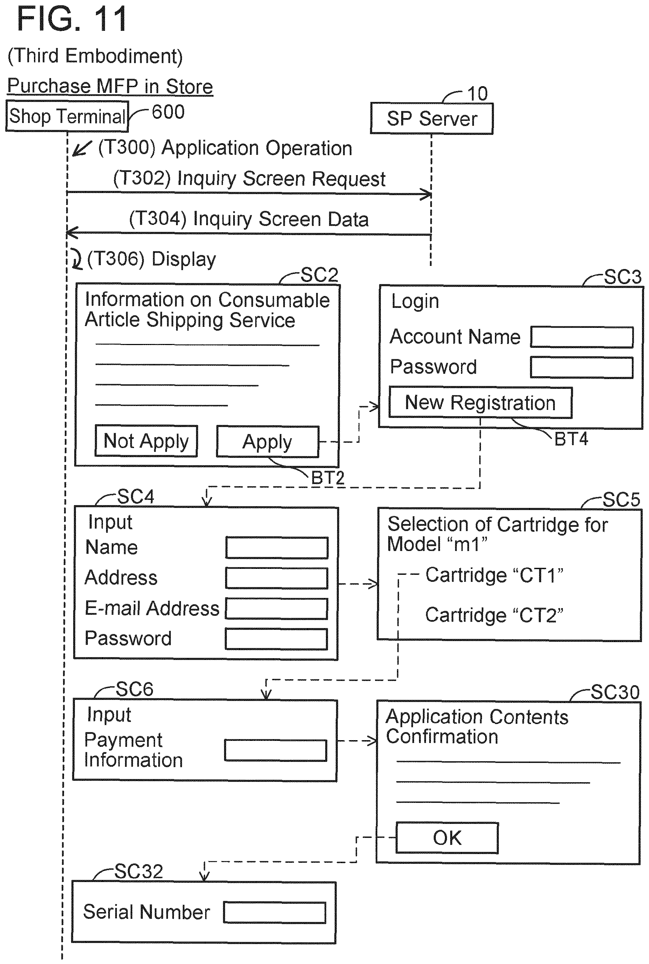

### (Process to Purchase MFP at Store; FIG. 11)

In the present embodiment, the user purchases the MFP"m1" not online but at a store. In the present embodiment, the user may transport the MFP"m1" to the predetermined place himself/herself or ask the store to transport the MFP"m1". A communication system according to the present embodiment is the same as the communication system 2 according to the first embodiment, except that the former comprises a store terminal 600 instead of the user terminal 200. The store terminal 600 is a terminal device installed in the store and available to employees of the store and the user.

The process of FIG. 11 is executed after payment of the MFP"m1" has been completed at the store. An employee of the store suggests that the user apply for the shipping service. In T300, the employee of the store performs an application operation for applying for the shipping service to the store terminal 600.

When accepting the application operation from the employee in T300, the store terminal 600 sends an inquiry screen request to the SP server 10 in T302. The inquiry screen request is a signal that requests inquiry screen data corresponding to an inquiry screen SC2 that inquires whether to apply for the shipping service or not. In T304, the store terminal 600 receives the inquiry screen data from the SP server 10, and displays the inquiry screen SC2 in T306. Also in the present embodiment, as with the first embodiment, the screens SC3 to SC6 are sequentially displayed after the inquiry screen SC2. The screens SC2 to SC6 and a screen SC30, which will be described later, are operated by the user.

In the present embodiment, when a color material cartridge with the cartridge name "CT1" is selected in the selection screen SC5, the store terminal 600 displays a confirmation screen SC30. The confirmation screen SC30 includes a message that confirms details about the application for the shipping service and an OK button. When the OK button in the confirmation screen SC30 is selected, the store terminal 600 displays a serial input screen SC32. The serial input screen SC32 includes an input field for input of the serial number of a purchased product. The serial input screen SC32 is operated by the employee. The employee inputs the serial number SN1 of the purchased MFP"ml" to the serial input screen SC32. The store terminal 600 sends the inputted serial number SN1 to the SP server 10.

In the present embodiment, the processes of FIGS. 4 to 6 are executed after the process of FIG. 11, as with the first embodiment. However, in the present embodiment, the seral number included in the registration request of T72 in FIG. 4 is the serial number SN1 inputted to the serial input screen SC32.

Also in the present embodiment, the user does not need to request the activation key AK1 to the SP server 10 after the MFP"m1" has been installed in the predetermined place, as with the first embodiment. Thus, the shipping service can be provided promptly. Further, in the present embodiment, the application for the shipping service of color material cartridge mountable on the MFP"m1" and the purchase of the MFP"m1" at the store can be done at a time through the process of FIG. 11. The user does not need to apply for the shipping service before or after purchasing the MFP"m1". User convenience can be improved. In the present embodiment, the store terminal 600 is an example of "terminal device".

While the invention has been described in conjunction with various example structures outlined above and illustrated in the figures, various alternatives, modifications, variations, improvements, and/or substantial equivalents, whether known or that may be presently unforeseen, may become apparent to those having at least ordinary skill in the art. Accordingly, the example embodiments of the disclosure, as set forth above, are intended to be illustrative of the invention, and not limiting the invention. Various changes may be made without departing from the spirit and scope of the disclosure. Therefore, the disclosure is intended to embrace all known or later developed alternatives, modifications, variations, improvements, and/or substantial equivalents. Some specific examples of potential alternatives, modifications, or variations in the described invention are provided below.

(Modification 1) In the embodiments above, the MFP"m1" is purchased by the user. Instead of this, the MFP"m1" may be leased to the user on the condition that the user pays a lease fee. In this instance, information related to the lease of the MFP"m1" (e.g., personal information, payment information) is communicated between the user terminal 200 and the SP server 10. In this modification, the communication on the lease as above is an example of "predetermined communication related to supply of a device to the user".

(Modification 2) The SP server 10 and the management server 100 may be integrated in a single server. In this modification, this single server is an example of "server".

(Modification 3) The "specific service" is not limited to the shipping service but may be, for example, a service of operating an MFP remotely via a server on the Internet 6 (e.g., remote printing).

(Modification 4) A means to "notify the authentication information to the user" is not limited to the key notification e-mail (i.e., e-mail) but may be text messages such as SMS (short message service), SNS (social networking service) messaging, postal mail, or the like.

(Modification 5) In the third embodiment above, the activation key AK1 is sent to the user by e-mail. Instead of this, a piece of paper on which the activation key AK1 has been printed may be handed to the user from the employee of the store.

(Modification 6) The activation key AK1 may be sent to the user by using information different from the personal information PS1 received from the user terminal 200 (e.g., by using an e-mail address stored in advance in the SP server 10).

(Modification 7) The "consumable article" is not limited to the color material cartridge but may be, for example, a print medium (e.g., sheets), a replacement part for MFP other than the color material cartridge, or the like.

(Modification 8) The "device" is not limited to the MFP but may be, for example, a printer, a scanner, a facsimile machine, a PC, or the like.

(Modification 9) In the embodiments above, the processes of FIGS. 3 to 6 and FIGS. 8 to 11 are implemented by software (e.g., the programs 40, 140), however, at least one of these processes may be implemented by hardware such as a logic circuit, etc.

## Claims

1. A server (10, 100), comprising:
a memory (34, 134);
a communication interface (12, 112) configured to communicate with an external;
a first receiving unit (30, 130) configured to receive user information (PS1, AC1) indicating a user from a terminal device (200) via the communication interface in a case where predetermined communication is executed with the terminal device via the communication interface, wherein the predetermined communication is related to supply of a device to the user, the device is transported to a predetermined place after the predetermined communication has been executed, and the user information is used for a specific service related to the device;
a first storing unit (30, 130) configured to, in a case where the user information is received from the terminal device, store authentication information (AK1) in the memory in association with the user information received from the terminal device;
a notification unit (30, 130) configured to, in a case where the authentication information is stored in the memory, notify the authentication information to the user;
a second receiving unit (30, 130) configured to, in a case where the authentication information notified to the user is inputted to the device after the device has been transported to the predetermined place, receive the authentication information from the device via the communication interface; and
a shifting unit (30, 130) configured to, in a case where the authentication information is received from the device, shift a state of the server from a first state to a second state, wherein the first state is a state where the specific service for which the user information is used is not provided to the user, and the second state is a state where the specific service for which the user information is used is provided to the user.

2. The server according to claim 1, wherein
in the case where the user information is received from the terminal device, the first storing unit is configured to store the authentication information in the memory in association with the user information and identification information (SN1) identifying the device,
the identification information is used for the specific service, and
the first state is a state where the specific service is not provided to the user despite the identification information being stored in the memory.

3. The server according to claim 2, wherein
in a case where the authentication information is inputted to a specific device, the second receiving unit is further configured to receive specific information stored in the specific device from the specific device via the communication interface,
the shifting unit is configured to shift the state of the server from the first state to the second state in a case where the authentication information and the specific information are received from the specific device and the specific information received from the specific device matches the identification information stored in the memory due to the specific device being the device, and
the state of the server is not shifted from the first state to the second state in a case where the authentication information and the specific information are received from the specific device and the specific information received from the specific device does not match the identification information stored in the memory.

4. The server according to claim 1, wherein
in the case where the authentication information is inputted to the device, the second receiving unit receives identification information (SN1) identifying the device from the device via the communication interface,
the server further comprises a second storing unit (30, 130) configured to, in a case where the identification information and the authentication information are received from the device, store the identification information received from the device in the memory in association with the user information associated with the authentication information in the memory,
the first state includes a state where the identification information is not stored in the memory, and
the second state includes a state where the identification information is stored in the memory.

5. The server according to any one of claims 1 to 4, wherein
the notification unit is configured to notify the authentication information to the user by using the user information received from the terminal device.

6. The server according to claim 5, wherein
the user information includes an e-mail address that the user is able to use,
the notification unit is configured to notify the authentication information to the user by sending an e-mail in which the authentication information is written to a recipient indicated by the e-mail address included in the user information.

7. The server according to any one of claims 1 to 6, wherein
a timing when the device is transported to the predetermined place is different from a timing when the authentication information is notified to the user.

8. The server according to any one of claims 1 to 7, wherein
the predetermined communication includes:
sending screen data corresponding to an instruction accepting screen (SC1) to the terminal device via the communication interface, the instruction accepting screen including a button for accepting an instruction for the supply of the device to the user; and
sending screen data corresponding to an input screen (SC4, SC6, SC3) to the terminal device via the communication interface in a case where the button is selected by the user, the input screen including an input field for accepting input of the user information.

9. The server according to any one of claims 1 to 8, wherein
the supply of the device to the user includes purchase of the device.

10. The server according to any one of claims 1 to 8, wherein
the specific service includes a service of shipping a consumable article that is used in the device to a destination included in the user information.

11. A control method for a server (10, 100), wherein the serve comprises:
a memory (34, 134); and
a communication interface (12, 112) configured to communicate with an external, wherein
the control method comprises:
a first receiving step (Fig.3) for receiving user information (PS1, AC1) indicating a user from a terminal device via the communication interface in a case where predetermined communication is executed with the terminal device via the communication interface, wherein the predetermined communication is related to supply of a device to the user, the device is transported to a predetermined place after the predetermined communication has been executed, and the user information is used for a specific service related to the device;
a storing step (T22, T60, T72) for, in a case where the user information is received from the terminal device, storing authentication information (AK1) in the memory in association with the user information received from the terminal device;
a notification step (T80) for, in a case where the authentication information is stored in the memory, notifying the authentication information to the user;
a second receiving step (T106) for, in a case where the authentication information notified to the user is inputted to the device after the device has been transported to the predetermined place, receiving the authentication information from the device via the communication interface; and
a shifting step (T120 to T130) for, in a case where the authentication information is received from the device, shifting a state of the server from a first state to a second state, wherein the first state is a state where the specific service for which the user information is used is not provided to the user, and the second state is a state where the specific service for which the user information is used is provided to the user.
